## Europäisches Patentamt

## European Patent Office

## Office européen des brevets

(19)

(11) Veröffentlichungsnummer: **0 220 506 B1**

(12) **EUROPÄISCHE PATENTSCHRIFT**

(45) Veröffentlichungstag der Patentschrift: 13.03.91

(51) Int. Cl.⁵: **C08J 9/14, C08L 61/28**

(21) Anmeldenummer: 86113251.2

(22) Anmeldetag: 26.09.86

Die Akte enthält technische Angaben, die nach dem Eingang der Anmeldung eingereicht wurden und die nicht in dieser Patentschrift enthalten sind.

(54) Verfahren zur Herstellung von elastischen Melamin-Schaumstoffen.

(30) Priorität: 28.09.85 DE 3534738

(43) Veröffentlichungstag der Anmeldung:
06.05.87 Patentblatt 87/19

(45) Bekanntmachung des Hinweises auf die
Patenterteilung:
13.03.91 Patentblatt 91/11

(84) Benannte Vertragsstaaten:
**AT BE CH DE FR GB IT LI NL SE**

(56) Entgegenhaltungen:
EP-A- 0 017 671
EP-A- 0 053 441
WO-A-85/00374

(73) Patentinhaber: BASF Aktiengesellschaft
Carl-Bosch-Strasse 38
W-6700 Ludwigshafen(DE)

(72) Erfinder: Woerner, Frank Peter, Dr.
Am Altenbach 18
W-6706 Wachenheim(DE)
Erfinder: Neumann, Peter, Dr.
Franz-Schubert-Strasse 1
W-6908 Wiesloch(DE)
Erfinder: Mahnke, Harald, Dr.
Osloer Weg 48
W-6700 Ludwigshafen(DE)
Erfinder: Lamprecht, Josef, Dr.
Fohlenstrasse 5d
W-6710 Frankenthal(DE)
Erfinder: Horn, Dieter, Dr.
Schroederstrasse 69
W-6900 Heidelberg(DE)
Erfinder: Turznik, Gerhard, Dr.
Budapester Strasse 45
W-6700 Ludwigshafen(DE)
Erfinder: Kraus, Friedrich, Dr.
Volkerstrasse 33
W-6140 Bensheim(DE)
Erfinder: Kaeppel, Hanshelmut
Traminerstrasse 11
W-6940 Weinheim(DE)
Erfinder: Heim, Eduard
Nolaystrasse 2
W-6520 Worms 21(DE)

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Verfahren zur Herstellung von Melaminharz-Schaumstoffen mit hoher Elastizität.

In der EP-A-17 671 (US-A 4 540 717) ist ein Verfahren zur Herstellung von Melaminharz-Schaumstoffen beschrieben, bei dem man eine konzentrierte wäßrige Lösung, welche ein Melamin/Formaldehyd-Vorkondensat, einen Emulgator, ein flüchtiges Treibmittel, einen Härter, sowie gegebenenfalls weitere Zusatzstoffe enthält, unter solchen Bedingungen verschäumt, daß zunächst nur ein geringer Viskositätsanstieg erfolgt und der Härtungsvorgang unter starker Viskositätserhöhung erst dann einsetzt, wenn der Schäumvorgang weitgehend beendet ist. Dieses Verfahren liefert zwar Schaumstoffe, die elastischer sind als die früher bekannten Melaminharz-Schäume, für viele Anwendungszwecke sind sie jedoch immer noch zu spröde.

Nach der EP-A-37 470 (US 4 334 971) sollen die zur Schaumherstellung verwendeten Melaminharze Sulfitgruppen einkondensiert enthalten. Derartige Schaumstoffe zeigen jedoch eine hohe Hydrolyseempfindlichkeit und eine geringe Licht- und Wärmestabilität. Ähnliches trifft auch für Schäume zu, bei deren Herstellung nach EP-A-17 671 als Härter Hydrogenphosphate zugesetzt wurden. Nach EP-A-53 441 sollen als Härter bei der Herstellung von Fasern oder Schäumen aus Aminoplastharzen Ammoniumsalze zugesetzt werden. Im Falle von Melaminharz-Schaumstoffen bewirken Ammoniumsalze jedoch eine extreme Feinzelligkeit und damit sehr spröde Schäume.

Der Erfindung lag also die Aufgabe zugrunde, ein Verfahren zur Herstellung von Melaminharz-Schaumstoffen mit hoher Elastizität, geringer Hydrolyseempfindlichkeit und guter Stabilität gegen den Einfluß von Licht und Wärme zu entwickeln.

Diese Aufgabe wird erfindungsgemäß dadurch gelöst, daß man der zu verschäumenden wäßrigen Lösung des Melamin/Formaldehyd-Vorkondensats 0,2 bis 4 Gew.% einer Kombination aus (A) einem Alkali-, Erdalkali- oder Aluminiumsalz einer mehrbasischen organischen Säure, der Polyphosphorsäuren oder einer Borsäure und (B) einem Alkali- oder Erdalkalisalz einer organischen Säure oder einer Sauerstoffsäure des Schwefels, des Phosphars oder des Bars, wobei die Säure des Salzes B geringer basisch ist als die Säure des Salzes A, im Gewichtsverhältnis A:B zwischen 10:90 und 50:50 zusetzt.

Es wird angenommen, daß die zugesetzten Salze die Entmischung der wäßrigen Lösung des kondensierenden Melaminharzes in eine wäßrige und eine Harzphase erleichtern und so zur rechtzeitigen Ausbildung und Stabilisierung von Zellstegen beitragen, die für die Elastizität des Schaums verantwortlich sind. Überraschend ist jedoch, daß nur die beanspruchten Salze und nicht generell alle Elektrolyten wirksam sind, und daß bei Zusatz spezieller Salzkombinationen besonders elastische Schaumstoffe entstehen.

Die Art und Menge der Einsatzstoffe, sowie die Bedingungen, unter denen das Schäumen und Aushärten vorgenommen wird, ist in der EP-A-17 671, auf die hier ausdrücklich Bezug genommen wird, ausführlich beschrieben.

Erfindungsgemäß werden der wäßrigen Lösung 0,2 bis 4, vorzugsweise 0,3 bis 3 Gew.%, bezogen auf das Vorkondensat, eines Salz-Kombination zugesetzt. Wirksame Salze sind solche von einbasischen organischen Säuren, wie z.B. Natriumformiat und Natriumacetat, vorzugsweise aber von mehrbasischen organischen Säuren, wie Natriumoxalat und -tartrat, Natrium- und Kaliumcitrat, Natriumnitrilotriessigsäure und Natriumethylendiamintetraessigsäure. Besonders wirksam sind Salze von polymeren organischen Säuren, wie Natriumpolyacrylat, das Natriumsalz eines Copolymeren aus 70 Gew.% Acrylsäure und 30 Gew.% Maleinsäure, Calciumligninsulfonat, sowie Gelatine (ein Calciumsalz eines Kondensationsproduktes verschiedener Aminosäuren), ferner Natriumtripolyphosphat, Natriummetaborat, Calciummetaborat, Borax und Bentonit.

Verwendet werden Kombinationen aus

A. einem Alkali-, Erdalkali- oder Aluminiumsalz mehrbasischer organischer Säuren, der Polyphosphorsäuren oder einer Borsäure und

B. einem Alkali- oder Erdalkalisalz einer organischen Säure oder einer Sauerstoffsäure des Schwefels, Phosphors oder des Bors, wobei die Säure des Salzes B geringer basisch ist als die Säure des Salzes A,

im Gewichtsverhältnis A:B zwischen 10:90 und 50:50.

Als Salze A eignen sich die oben aufgezählten Salze mehrbasischer Säuren; als Salze B können ebenfalls die oben aufgeführten Salze dienen, ferner Salze von Sauerstoffsäuren des Schwefels, wie Natrium- und Kaliumsulfat, Kaliumdisulfat oder Natriumsulfit, sowie des Phosphors, wie Natrium- und Kaliumphosphat, Dinatriumhydrogenphosphat oder Kaliumdiphosphat. Wesentlich ist, daß beim Salz B die Säure geringer basisch ist als beim Salz A. Beispielsweise kann ein Salz A einer zweibasischen Säure, z.B. Borax, mit einem Salz B einer einbasischen Säure, z.B. Natriumformiat kombiniert werden, oder ein Salz A einer polybasischen Säure, z.B. Calciummetaborat, mit einem Salz einer dreibasischen Säure, z.B. Kalium-

2

phosphat. Besonders bevorzugt sind Kombinationen von 0,1 bis 1 Gew.% eines Alkalisalzes einer polymeren Säure mit 0,5 bis 2,5 Gew.% eines Alkalisalzes der Ameisensäure.

Die in den Beispielen genannten Teile und Prozente beziehen sich auf das Gewicht.

Folgende Meßmethoden wurden angewandt:

a) Stempeldruckmessung (mechanischeQualitätsprüfung)

Probekörper der Abmessungen 25×25×10 cm werden in Schäumrichtung mit einem Stempel (Ø 25 mm, Kalottenradius 40 mm, Kantenradius 2 mm), der in einem Winkel von 75° auf die Probenoberflächen auftrifft, bis zum Einreißen eingedrückt und der Reißkraftwert als Maß für die mechanische Qualität des Schaumstoffs ermittelt.

b) Hydrolysestabilität

Schaumstoffproben werden in einem Klimaschrank bei 90° und 90 % relativer Feuchtigkeit gelagert.

c) Wärmestabilität

Schaumstoffprobekörper werden einer 24stündigen Lagerung bei 240 bzw. 270° ausgesetzt. Sie müssen zumindest den Test bei 240° ohne wesentliche Verschlechterung der Kantenstabilität (geprüft durch kräftiges Darüberstreichen mit dem Daumen) überstehen.

Beispiele

Es wurde eine Lösung hergestellt aus

| 5 Teilen | Wasser |
| 6,5 Teilen | 75 %iger Ameisensäure |
| 0,2 Teilen | basischem Kupfercarbonat |
| 7,0 Teilen | Natriumsalz eines Gemisches von $C_{12}$-$C_{18}$-Alkylsulfonsäuren (40 %ig in Wasser) |
| 2,0 Teilen | des Natriumsalzes des sulfatierten, mit 25 Mol Ethylenoxid umgesetzten Isooctylphenols (35 %ig in Wasser). |

In dieser Lösung wurden 50 Teile Pentan emulgiert.

240 Teile eines Melamin/Formaldehyd-Vorkondensats (Molverhältnis 1:3) wurden mit 60 Teilen Wasser, 3 Teilen Natriumformiat und - in zwei Ansätzen mit 1 Teil Natriumtripolyphosphat bzw. Natriumpolyacrylat (50 %ig in Wasser) angeteigt.

In einem Mixer wurde die wäßrige Emulsion mit dem angeteigten Vorkondensat homogen vermischt, in einem Heißluftofen bei 150° C geschäumt und der Schaum anschließend 30 min bei 230° C getempert.

Die erhaltenen Schaumstoffe haben eine Dichte von 12 g/l, ihre Hydrolysestabilität ist größer als 6 Wochen, sie überstehen den 24stündigen Wärmestabilitätstest ohne wesentliche Beeinträchtigung der mechanischen Qualität. Die Werte der Stempeldruckmessung betragen:

| Salzzusatz | Eindruckkraft N] |
|---|---|
| Na-tripolyphosphat | 43 |
| Na-polyacrylat | 41 |

**Ansprüche**

3

1. Verfahren zur Herstellung von elastischen Schaumstoffen auf Basis von Melaminharzen durch Verschäumen einer wäßrigen Lösung, welche ein Melamin/Formaldehyd-Vorkondensat, einen Emulgator, ein flüchtiges Treibmittel und einen Härter, sowie ggf. übliche Zusatzstoffe enthält, und anschließendes Aushärten des Schaums, dadurch gekennzeich net . daß der wäßrigen Lösung 0,2 bis 4 Gew.%, bezogen auf das Vorkondensat, einer Kombination aus
   (A) einem Alkali-, Erdalkali- oder Aluminiumsalz einer mehrbasischen organischen Säure, der Polyphosphorsäuren oder einer Borsäure und
   (B) einem Alkali- oder Erdalkalisalz einer organischen Säure oder einer Sauerstoffsäure des Schwefels, Phosphors oder des Bors, wobei die Säure des Salzes B geringer basisch ist als die Säure des Salzes A, im Gewichtsverhältnis A:B zwischen 10:90 bis 50:50 zugesetzt wird.

2. Verfahren nach Anspruch 1, dadurch gekennzeichnet, daß als (A) ein Salz einer polymeren Säure eingesetzt wird.

3. Verfahren nach Anspruch 1, dadurch gekennzeichnet, daß eine Kombination von (A) 0,1 bis 1 Gew.% eines Alkalisalzes einer polymeren Säure mit (B) 0,5 bis 2,5 Gew.% eines Alkalisalzes der Ameisensäure, bezogen auf das Vorkondensat, eingesetzt wird.


**Claims**

1. A process for the production of resilient foams based on melamin resins by foaming an aqueous solution which contains a melamin-formaldehyde precondensate, an emulsifier, a volatile blowing agent and a curing agent and, if desired, customary additives, and subsequently curing the foam, which comprises adding to the aqueous solution from 0.2 to 4% by weight, based on the precondensate, of a combination of
   (A) an alkali metal salt, alkaline earth metal salt or aluminum salt of a polybasic organic acid, polyphosphoric acid or boric acid and
   (B) an alkali metal salt or alkaline earth metal salt of an organic acid or of an oxo-acid of sulfur, phosphorus or boron, the acid of salt B having lower basicity than the acid of salt A, in an A:B weight ratio of from 10:90 to 50:50.

2. A process as claimed in claim 1, wherein (A) is a salt of a polymeric acid.

3. A process as claimed in claim 1, wherein a combination of (A) from 0.1 to 1% by weight of an alkali metal salt of a polymeric acid with (B) from 0.5 to 2.5% by weight of an alkali metal salt of formic acid, based on the precondensate, is employed.


**Revendications**

1. Procédé de préparation de mousses élastiques à base de résines de mélamine, par le moussage d'une solution aqueuse qui contient un produit de précondensation de mélamine et de formaldéhyde, un émulsif, un agent porogène volatil et un durcisseur, comme éventuellement aussi des additifs usuels, caractérisé en ce que l'on ajoute, à la solution aqueuse, de 0,2 à 4% en poids, par rapport au produit de précondensation, d'une combinaison d'un
   (A) sel de métal alcalin, de métal alcalino-terreux ou d'ammonium d'un acide organique polybasique, des acides polyphosphoriques, ou d'un acide borique et
   (B) sel de métal alcalin ou de métal alcalino-terreux d'un acide organique, ou d'un acide oxygéné du soufre, du phosphore ou du bore, où l'acide du sel B est plus faiblement basique que l'acide du sel A, l'addition s'effectuant dans le rapport pondéral A:B de 10:90 à 50:50.

2. Procédé suivant la revendication 1, caractérisé en ce que l'on utilise un sel d'un acide polymérique à titre de (A).

3. Procédé suivant la revendication 1, caractérisé en ce que l'on utilise une combinaison de (A) 0,1 à 1% en poids d'un sel de métal alcalin d'un acide polymérique et de (B) 0,5 à 2,5% en poids d'un sel de métal alcalin de l'acide formique, par rapport au produit de précondensation.